# EUROPEAN PATENT APPLICATION

(11) **EP 4 582 912 A1**
(43) Date of publication of application: **09.07.2025**
(21) Application number: 24190667.6
(22) Date of filing: 24.07.2024
(51) Int. Cl.: G06F 3/0354, G06F 3/038, G06F 3/041, G06F 3/0482, G06F 3/0488

(54) **DISPLAY SYSTEM AND DISPLAY METHOD**

(30) Priority: 05.01.2024 US 202463617775 P; 17.04.2024 US 202418637460
(71) Applicant: Optoma Coporation, New Taipei City 231633 (TW)
(72) Inventor: Tsui, Yuan-Mao, 231633 New Taipei City (TW); Shen, Hun-Yu, 231633 New Taipei City (TW)
(74) Representative: Ter Meer Steinmeister & Partner

(57) **Abstract**

A display system and a display method are provided. The display system comprises: a stylus, a touchscreen display, and a terminal device. The touchscreen display comprises a frame and a sensor. The sensor detects whether the stylus is near the frame. The terminal device communicatively connects to the touchscreen display. In response to the stylus being moved away from the frame, the touchscreen display transmits an operation signal to the terminal device and controls the terminal device according to the operation signal.

## Description

### CROSS-REFERENCE TO RELATED APPLICATION

This application claims the priority benefit of U.S. Provisional Patent Application serial no. 63/617,775, filed on January 5, 2024, and U.S. Patent Application serial no. 18/637,460, filed on April 17, 2024. The entirety of the above-mentioned patent application is hereby incorporated by reference herein and made a part of this specification.

### BACKGROUND

### Technical Field

The disclosure generally relates to communicative connection between at least two electrical devices, and more particularly, a display system including at least two electrical devices and a display method adapted to the display system.

### Description of Related Art

The conventional touchscreen device such as interactive flat panel (IFP) allows a user to command the touchscreen device through a stylus. The user may perform writing or drawing on the touchscreen device by operating the stylus. However, the touchscreen device may not aware that the stylus is being used by the user. Therefore, the touchscreen cannot execute an app suitable for the stylus automatically. How to provide a convenient method for the user to command the touchscreen device using the stylus is an issue in the field.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

It is object of the invention to provide a method a display device being convenient for the user to command the touchscreen device using the stylus is an issue in the field.

The disclosure provides a display system and a display method. The disclosure is the display system comprising: a stylus, a touchscreen display, and a terminal device. The touchscreen display comprises a frame and a sensor. The sensor detects whether the stylus is near the frame. The terminal device communicatively connects to the touchscreen display. In response to the stylus being moved away from the frame, the touchscreen display transmits an operation signal to the terminal device and controls the terminal device according to the operation signal.

In one embodiment of the disclosure, the touchscreen display may comprises a first operation system and the terminal device may comprises a second operation system.

The first operation system and the second operation system may be different.

The operation signal may be a signal of shortcut key of the second operation system.

In one embodiment of the disclosure, the touchscreen display may further comprise a touchscreen and a process apparatus.

The process apparatus may be electrically coupled to the touchscreen.

The touchscreen may receive a user operation and may transmit the user operation to the process apparatus.

The process apparatus may generate a transmitted signal according to the user operation to convert the transmitted signal into the operation signal.

In one embodiment of the disclosure, the terminal device may comprise a screen.

The touchscreen display may execute a first application.

The terminal device may execute the first application.

The terminal device may generate handwriting on a content displayed on the screen by the first application according to the user operation of the touchscreen display.

In one embodiment of the disclosure, in response to the stylus being moved near the frame, the touchscreen display may transmit a disable signal to the terminal device.

The terminal device may stop an executed application according to the disable signal.

In one embodiment of the disclosure, the touchscreen display may further comprise a touchscreen and a process apparatus.

The touchscreen display may provide an on-screen display (OSD) menu on the touchscreen.

A plurality of modes may be displayed in the OSD menu.

The touchscreen may receive a user command and transmits the user command to the process apparatus for setting up the touchscreen display.

The user command may correspond to a selected mode from the plurality modes.

In one embodiment of the disclosure, in response to the stylus being moved away from the frame, the touchscreen display may determine whether a program is being executed by the process apparatus.

In response to the program being executed by the touchscreen display, the touchscreen display may perform overlapping handwriting on a content displayed on the touchscreen by a second application according to a user operation.

The user operation may be received by the touchscreen.

In one embodiment of the disclosure, in response to the stylus being moved away from the frame, the touchscreen display may determine whether a program is being executed by the process apparatus.

In response to the program not being executed by the touchscreen display, the touchscreen display may execute a default application.

In one embodiment of the disclosure, in response to the stylus being moved near the frame, the touchscreen display may generate a disable signal.

The touchscreen display may stop an executed application according to the disable signal.

In one embodiment of the disclosure, the sensor may include one of a magnetic sensor, an infrared sensor and a proximity sensor.

In one embodiment of the disclosure, the first operation signal may be transmitted from the touchscreen display to the terminal device based on one of the following protocols: High Definition Multimedia Interface, Open Pluggable Specification, Universal Serial Bus, Wi-Fi, and Bluetooth.

In one embodiment of the disclosure, the terminal device may comprise a screen. The touchscreen display may transmit a request message to the terminal device periodically. The terminal device may display the request message by the screen. The terminal device may establishe a communicative connection between the terminal device and the touchscreen display according to a user command from the terminal device.

In one embodiment of the disclosure, the touchscreen display may comprise a touchscreen and the terminal device may comprise a screen, the touchscreen may display an image and the screen may be configured to display the same image.

In one embodiment of the disclosure, the frame may be configured with a container, the container may be configured to accommodate the stylus, and the sensor may locate to the container.

In one embodiment of the disclosure, the frame may configure with an area, the stylus may be configured to attach on the area, and the sensor may locate in the area of the frame.

The disclosure is directed to a display method. The display method is adapted to a display system. The display system comprises a stylus, a touchscreen display with a frame and a sensor, and a terminal device. The display method comprises: detecting whether the stylus is near the frame of the touchscreen display; communicatively connecting the touchscreen display with the terminal device; and in response to the stylus being moved away from the frame, transmitting an operation signal to a terminal device by the touchscreen display and controlling the terminal device by the touchscreen display according to the operation signal.

In one embodiment of the disclosure, the touchscreen display may further comprise a touchscreen and a process apparatus.

The process apparatus may be electrically coupled to the touchscreen.

The display method may further comprise: receiving a user operation by the touchscreen; transmitting the user operation to the process apparatus from the touchscreen; generating a transmitted signal according to the user operation by the process apparatus; and converting the transmitted signal into the operation signal by the process apparatus.

In one embodiment of the disclosure, the terminal device may comprise a screen.

The method may further comprise: executing a first application by the touchscreen display; executing the first application by the terminal device; and generating handwriting on a content displayed on the screen of the terminal device by the first application according to the user operation of the touchscreen display.

Other objectives, features and advantages of the disclosure will be further understood from the further technological features disclosed by the embodiments of the disclosure wherein there are shown and described preferred embodiments of this disclosure, simply by way of illustration of modes best suited to carry out the disclosure.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1A and FIG. 1B illustrate schematic diagrams of display system according to one embodiment of the disclosure.
FIG. 1C and FIG. 1D illustrate schematic diagrams of display system according to another one embodiment of the disclosure.
FIG. 2 illustrates a flowchart of a display method according to embodiments of the disclosure.
FIG. 3 illustrates a flowchart of another display method according to embodiments of the disclosure.

### DESCRIPTION OF THE EMBODIMENTS

It is to be understood that other embodiment may be utilized and structural changes may be made without departing from the scope of the disclosure. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted," and variations thereof herein are used broadly and encompass direct and indirect connections, couplings, and mountings.

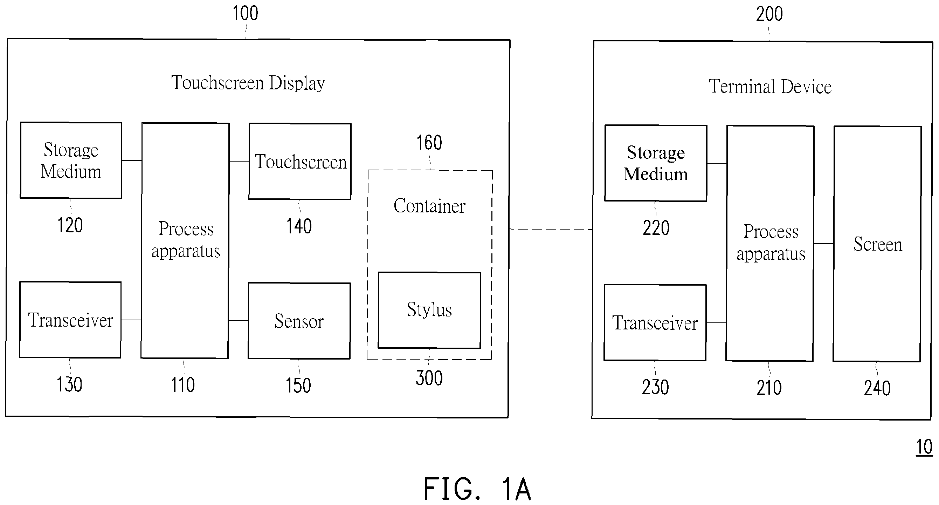

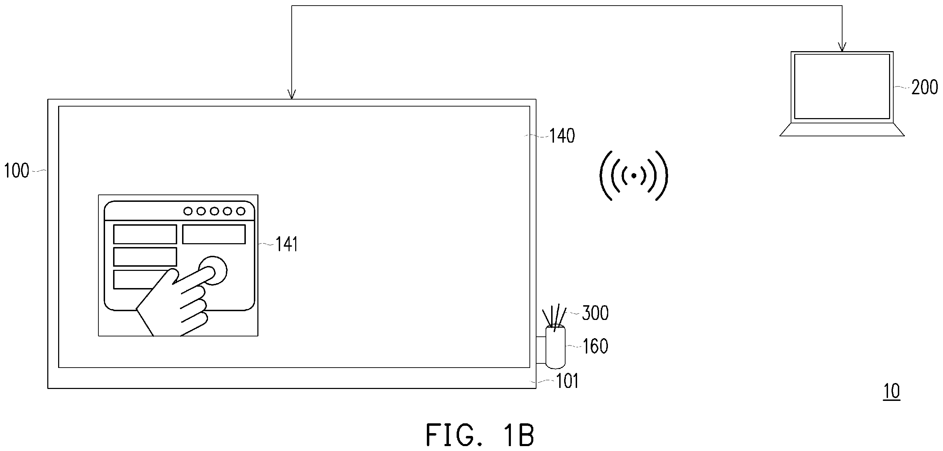

FIG. 1A and FIG. 1B illustrate schematic diagrams of display system 10 according to one embodiment of the disclosure. The display system 10 may include a touchscreen display 100, a terminal device 200, and a stylus 300. The touchscreen display 100 may be communicatively connected to the terminal device 200.

The touchscreen display 100 may be, for example, an interactive flat panel (IFP). The IFP is a display with a touch function. The touchscreen display 100 may include a process apparatus 110, a storage medium 120, a transceiver 130, a touchscreen 140, and a sensor 150. The frame 101 of the touchscreen display 100 may be configured with a container 160, wherein the stylus 300 may be placed in the container 160. In one embodiment, the container 160 may be attached to a side of the frame 101 of the touchscreen display 100. In one embodiment, the frame 101 of the touchscreen display 100 may include a groove to be the container 160 for accommodating the stylus 300.

The process apparatus 110 may be at least one processor. The processor may be, for example, a central processing unit (CPU) or other programmable micro control units (MCU) for general purpose or special purpose, a microprocessor, a digital signal processor (DSP), a programmable controller, an application specific integrated circuit (ASIC), a graphics processing unit (GPU), an arithmetic logic unit (ALU), a complex programmable logic device (CPLD), a field programmable gate array (FPGA), or other similar device or a combination of the above devices. The process apparatus 110 may be, respectively, electrically coupled to the storage medium 120, the transceiver 130, the touchscreen 140, and the sensor 150.

The storage medium 120 may be, for example, any type of fixed or removable random access memory (RAM), a read-only memory (ROM), a flash memory, a hard disk drive (HDD), a solid state drive (SSD) or similar element, or a combination thereof, configured to store a plurality of programs or various applications executable by the process apparatus 110.

The transceiver 130 may be a wired, a wireless, or a wired and wireless communication interface to be configured to transmit or receive wired or wireless signals. The transceiver 130 may also perform operations such as low noise amplifying, impedance matching, frequency mixing, up or down frequency conversion, filtering, amplifying, and so forth. The touchscreen display 100 may communicatively connect to the terminal device 200 through the transceiver 130 so as to transmit at least one signal (operation signal) to the terminal device 200 or receive at least one signal (video or audio signal) from the transceiver 230 of the terminal device 200. In one embodiment, the transceiver 130 of the touchscreen display 100 and the transceiver 230 of the terminal device 200 may be communicatively connected to each other by at least one cable or wireless signals using the wired/wireless communication protocol including High Definition Multimedia Interface (HDMI), Open Pluggable Specification (OPS), Universal Serial Bus (USB), Wi-Fi, or Bluetooth.

The touchscreen 140 may be one of a liquid-crystal display (LCD), a light-emitting diode (LED) display, and an organic light-emitting diode (OLED) display including one of a capacitive touchscreen and a resistive touchscreen, for example. The process apparatus 110 may provide an on-screen display (OSD) menu 141 to the touchscreen 140. The touchscreen 140 displays the OSD menu 141. The user may operate the OSD menu 141 such that the touchscreen 140 may receive a user command corresponding to the OSD menu 141 and transmit the user command to the process apparatus 110.

The sensor 150 may be located to the container 160 for detecting whether the stylus 300 is in the container 160 or not. The sensor 150 may include an infrared sensor, an optical sensor or a proximity sensor.

The terminal device 200 may be, for example, a smart phone, a tablet, or a computer. The terminal device 200 may include a process apparatus 210, a storage medium 220, a transceiver 230, and a screen 240.

The process apparatus 210 may be at least one processor. The processor may be, for example, a CPU or other programmable MCU for general purpose or special purpose, a microprocessor, a DSP, a programmable controller, an ASIC, a GPU, an ALU, a CPLD, a FPGA, or other similar device or a combination of the above devices.

The storage medium 220 may be, for example, any type of fixed or removable RAM, a ROM, a flash memory, a HDD, a SSD or similar element, or a combination thereof, configured to store a plurality of programs or various applications executable by the process apparatus 210.

The transceiver 230 may be a wired, a wireless, or a wired and wireless communication interface to be configured to transmit or receive wired or wireless signals. The transceiver 230 may also perform operations such as low noise amplifying, impedance matching, frequency mixing, up or down frequency conversion, filtering, amplifying, and so forth. The terminal device 200 may communicatively connect to the transceiver 130 of the touchscreen display 100 through the transceiver 230 so as to transmit signals to the touchscreen display 100 or receive signals from the transceiver 130 of the touchscreen display 100.

The screen 240 may include, for example, a liquid-crystal display (LCD), a light-emitting diode (LED) display, or an organic light-emitting diode (OLED) display.

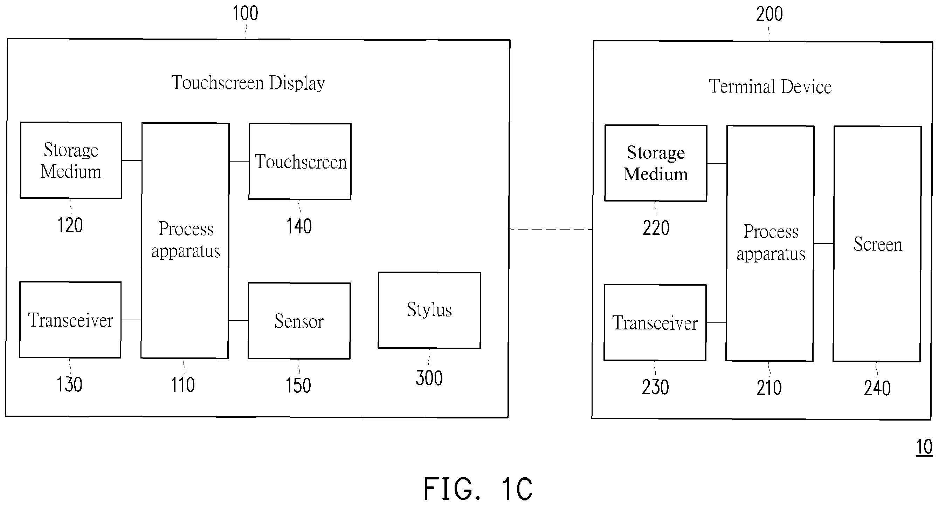

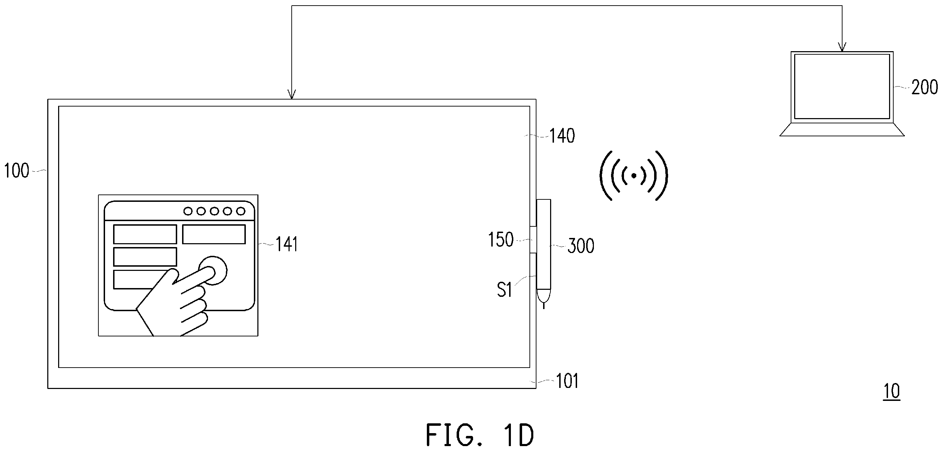

FIG. 1C and FIG. 1D illustrate schematic diagrams of display system according to another one embodiment of the disclosure. The differences between a display system of FIGS.1C and 1D and the display system of FIGS. 1A and 1B are that a sensor 150 is located in an area S1 of the frame 101 of the touchscreen display 100 of FIG. 1C and FIG. 1D, and the stylus 300 is attracted (attached) on the area S1 by magnetic force. For example, the sensor 150 is a magnetic sensor which detects variations of field of magnetic force to convert into electric signals. Therefore, the sensor 150 may detect whether the stylus 300 is taken away (moved away from the area S1 of the frame 101) or not. For example, the stylus 300 may comprise a magnet or a metal. A magnet or a metal may be located in the area S1 of the frame 101 of the touchscreen display 100.

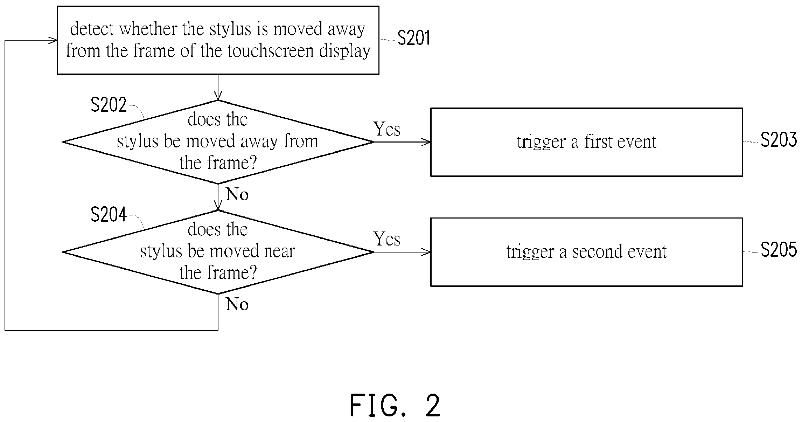

FIG. 2 illustrates a flowchart of a display method according to one embodiment of the disclosure, wherein the display method may be applied by the display system 10 as shown in FIG. 1B or FIG. 1D. In step S201, the touchscreen display 100 may detect whether the stylus 300 is moved away from the frame 101 of the touchscreen display 100 through the sensor 150 periodically. In the embodiment of the display system 10 of FIG. 1B, the touchscreen display 100 may detect whether the stylus 300 is in the container 160 through the sensor 150 periodically. More specifically, the touchscreen display 100 drives the sensor 150 to detect whether the stylus 300 is in the container 160 or not. Then, the sensor 150 feedbacks a detection signal to the touchscreen display 100. In the embodiment of the display system 10 of FIG. 1D, the touchscreen display 100 may detect whether the stylus 300 is taken away from the area S1 of the frame 101 of the touchscreen display 100 through the sensor 150 periodically. More specifically, the touchscreen display 100 drives the sensor 150 to detect whether the stylus 300 is taken away from the area S1 or not. Then, the sensor 150 feedbacks a detection signal to the touchscreen display 100.

In step S202, the process apparatus 110 of the touchscreen display 100 may determine whether the stylus 300 is moved away from the frame 101 according to the detection signal of the sensor 150. In the embodiment of the display system 10 of FIG. 1B, the process apparatus 110 of the touchscreen display 100 may determine whether the stylus 300 is taken out of the container 160 according to the detection signal of the sensor 150. If the stylus 300 is taken out of the container 160, the process apparatus 110 of the touchscreen display 100 of the display system 10 proceeds to step S203. If the stylus 300 is not taken out of the container 160 (e.g., the stylus 300 is kept in the container 160 or is not present in the container 160 from the beginning), the display system 10 proceeds to step S204. In the embodiment of the display system 10 of FIG. 1D, the process apparatus 110 of the touchscreen display 100 may determine whether the stylus 300 is taken away from the area S1 of the frame 101 of the touchscreen display 100 according to the detection signal of the sensor 150. If the stylus 300 is taken away from the area S1, the process apparatus 110 of the touchscreen display 100 of the display system 10 proceeds to step S203. If the stylus 300 is not taken away from the area S1 (e.g., the stylus 300 is kept to attach on the area S1 or is not present on the area S1 from the beginning), the display system 10 proceeds to step S204.

In step S203, after the process apparatus 110 of the touchscreen display 100 receives the detection signal of the stylus 300, the process apparatus 110 of the touchscreen display 100 may trigger a first event. It is means that the process apparatus 110 performs one of the modes of the touchscreen display 100 which is predetermined by the user. Therefore, the first event is one of the modes of the touchscreen display 100. The modes of the touchscreen display 100 describes in detail below.

In one embodiment, after the first event (Auto Mode) is triggered, the process apparatus 110 of the touchscreen display 100 may determine whether a program is being executed by the process apparatus 110 of the touchscreen display 100. If the program (for example, a text file reader, like PDF reader) is being executed by the process apparatus 110 of the touchscreen display 100, the process apparatus 110 of the touchscreen display 100 may perform overlapping handwriting on a content displayed on the touchscreen 140 by the application (for example, a annotation application) executed by the process apparatus 110 according to a user operation. The handwriting, for example, comprises at least one of writing and painting. The content may be a text or a drawing, etc.. The user operation means that the writing or the painting (the handwriting) is generated by the user's finger or the stylus 300 held by the user. The user operation may be received by the touchscreen 140. The touchscreen 140 transmits the user operation to the process apparatus 110. That is, the user may write or paint on the content providing by the executed application (for example, an annotation application). For example, after the first event is triggered, if a text file reader is executed by the touchscreen display 100, the process apparatus 110 of the touchscreen display 100 may annotate on article displayed on the touchscreen 140 by the annotation application according to the user operation. On the other hand, if no program is being executed by the process apparatus 110 of the touchscreen display 100, the process apparatus 110 of the touchscreen display 100 may execute a default application. The default application may be, for example, a whiteboard application. The whiteboard application is executed by the process apparatus 110 to provide a virtual whiteboard on the touchscreen 140 such that the user may write and paint (the user operation) to generate the handwriting on the virtual whiteboard.

In one embodiment, before the first event (External Connection Mode) is triggered, the terminal device 200 is communicatively connected to the touchscreen display 100. The terminal device 200 may transmit at least one video and audio signal to the touchscreen display 100 by at least one wire or wireless method. An image is displayed by touchscreen 140 of the touchscreen display 100 according to the video signal. Meanwhile, the image displayed by touchscreen 140 of the touchscreen display 100 is as the same as an image displayed by the screen 240 of the terminal device 200.

The first event (External Connection Mode) is triggered, the process apparatus 110 generates a transmitted signal according to the user operation on the touchscreen 140. The process apparatus 110 converts the transmitted signal into an operation signal. The touchscreen display 100 may transmit the operation signal to the terminal device 200. More specifically, in one embodiment, the touchscreen display 100 includes an operation system (Android OS) and the terminal device 200 includes the other operation system (iOS or Window OS). Due to different OS, different command signal is not available for the other operation system. Therefore, the touchscreen display 100 transmits the operation signal which is a signal of shortcut key of the operation system of the terminal device 200. Therefore, the terminal device 200 can be controlled by the touchscreen display 100 according to the operation signal.

Then, the terminal device 200 is controlled by the operation signal. For example, the terminal device 200 may be controlled to execute an application according to the operation signal. In one embodiment, when the whiteboard application is being executed by the touchscreen display 100 and the application (whiteboard application) is being executed by the terminal device 200, the terminal device 200 may generate handwriting on a content displayed on the screen by the whiteboard application according to a user operation on touchscreen 140 of the touchscreen display 100.

In one embodiment, the touchscreen display 100 may transmit a request message to the terminal device 200 periodically. The terminal device 200 may display the request message by the screen 240 so as to ask the user of the terminal device 200 whether to establish a communicative connection between the touchscreen display 100 and the terminal device 200. The terminal device 200 may receive (e.g., through input device such as keyboard) a user command corresponding to the request message. The terminal device 200 may establish a communicative connection between the terminal device 200 and the touchscreen display 100 according to the user command before the first event is triggered.

In step S204, the touchscreen display 100 may determine whether the stylus 300 is moved near the frame 101 according to the detection result generated by the sensor 150. In the embodiment of the display system 10 of FIG. 1B, the touchscreen display 100 may determine whether the stylus 300 is returned to the container 160 according to the detection result generated by the sensor 150. If the stylus 300 is returned to the container 160, the display system 10 proceeds to step S205. If the stylus 300 is not returned to the container 160 (e.g., the stylus 300 is not present in the container 160 or is kept in the container 160 from the beginning and never moved), the display system 10 proceeds to step S201 after a time period. That is, the steps as shown in FIG. 2 may be executed by the display system 10 of FIG.1B periodically. In the embodiment of the display system 10 of FIG. 1D, the touchscreen display 100 may determine whether the stylus 300 is reattached to the area S1 according to the detection result generated by the sensor 150. If the stylus 300 is reattached to the area S1, the display system 10 proceeds to step S205. If the stylus 300 is not reattached to the area S1 (e.g., the stylus 300 is not present on the area S1 or is kept to attach on the area S1 from the beginning and never moved), the display system 10 proceeds to step S201 after a time period. That is, the steps as shown in FIG. 2 may be executed by the display system 10 of FIG.1D periodically.

In step S205, the touchscreen display 100 may trigger a second event. The second event is a disable signal corresponding to a detection signal transmitted from the sensor 150. And the disable signal is generated by the process apparatus 110. In one embodiment, after the second event is triggered, an application is being executed by the touchscreen display 100, then the process apparatus 110 of the touchscreen display 100 may stop the executed application according to the disable signal.

In one embodiment, after the second event is triggered, if the terminal device 200 is communicatively connected to the touchscreen display 100, the touchscreen display 100 may transmit an operation signal (including the disable signal) to the terminal device 200. The application is being executed by the terminal device 200, and then the terminal device 200 may stop the executed application according to the operation signal (including the disable signal).

In one embodiment, the touchscreen display 100 of the display system 10 may have various modes. Table 1 shows an example of the various modes of the display system 10. In one embodiment, the touchscreen display 100 of the display system 10 may be performed switching from one mode to another mode according to a user command. Specifically, the touchscreen display 100 may provide an OSD menu 141 on the touchscreen 140. The various mode display in the OSD menu 141. The user may operate the OSD menu 141 such that the touchscreen 140 may receive a user command and transmit the user command to the process apparatus 110. For example, the user selects one mode of OSD menu 141, the process apparatus 110 may set up the touchscreen display 100 according to the selected mode. After the user operates the OSD menu 141, the touchscreen 140 may receive the user command from the operation in the OSD menu 141. The user may choose one mode of the touchscreen. The display system 10 may switch from one mode to another mode according to the user command.

**Table 1**

| Mode | Notes |
|---|---|
| Whiteboard Mode | The touchscreen display 100 may execute a whiteboard application after the stylus 300 is taken out of the container 160 or the stylus 300 is taken away from the area S1. The touchscreen display 100 may write or paint on a virtual whiteboard provided by the whiteboard application according to the user operation. |
| Annotation Mode | The touchscreen display 100 may execute an annotation application after the stylus 300 is taken out of the container 160 or the stylus 300 is taken away from the area S1. The touchscreen display 100 may overlap handwriting on a content (e.g., a text or a drawing) provided by the annotation application according to the user operation. The content is provided by a program (e.g., text file reader) executed by the touchscreen display 100. |
| Auto Mode | If no program is being executed by the touchscreen display 100, the touchscreen display 100 may execute the whiteboard application after the stylus 300 is taken out of the container 160 or the stylus 300 is taken away from the area S1. The touchscreen display 100 may write or paint on the virtual whiteboard provided by the whiteboard application according to the user operation. Otherwise, if a program (text file reader) is being executed by the touchscreen display 100, the touchscreen display 100 may execute the annotation application after the stylus 300 is taken out of the container 160 or the stylus 300 is taken away from the area S1. The touchscreen display 100 may overlap handwriting on the content provided by the annotation application according to the user operation. |
| External Connection Mode | The touchscreen display 100 may be enabled to transmit an operation signal to the terminal device 200 after the stylus 300 is taken out of the container 160 or the stylus 300 is taken away from the area S1. The terminal device 200 may be executed an application according to the user operation of the touchscreen display 100. The images respectively displayed by the touchscreen display 100 and the terminal device 200 may be the same. |
| Disable Mode | The touchscreen display 100 may do nothing after the stylus 300 is taken out of the container 160 or the stylus 300 is taken away from the area S1. |

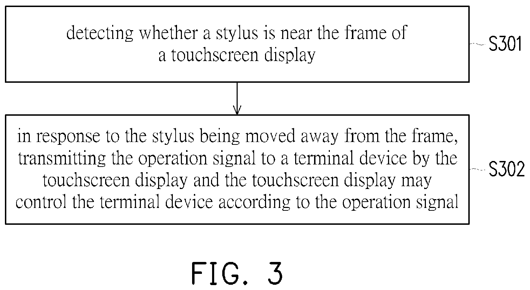

FIG. 3 illustrates a flowchart of another display method according to one embodiment of the disclosure, wherein the display method may be applied to the display system 10 as shown in FIG. 1A and FIG. 1B or applied to the display system 10 as shown in FIG. 1C and FIG. 1D. In step S301, detecting whether a stylus is near the frame of a touchscreen display. In the embodiment of the display system 10 of FIG. 1B, the sensor detects whether a stylus is in a container of a touchscreen display. In the embodiment of the display system 10 of FIG. 1D, the sensor detects whether a stylus is attached on the area S1 of a touchscreen display. In step S302, a touchscreen display communicatively connects with a terminal device, in response to the stylus being moved away from the frame, transmitting the operation signal to a terminal device by the touchscreen display and the touchscreen display may control the terminal device according to the operation signal. In the embodiment of the display system 10 of FIG. 1B, the touchscreen display communicatively connects with the terminal device, in response to the stylus being taken out of the container, transmitting the operation signal to a terminal device by the touchscreen display and the touchscreen display may control the terminal device according to the operation signal. In the embodiment of the display system 10 of FIG. 1D, the touchscreen display communicatively connects with the terminal device, in response to the stylus being taken away from area, transmitting the operation signal to a terminal device by the touchscreen display and the touchscreen display may control the terminal device according to the operation signal.

More specifically, in one embodiment, the touchscreen display may control the terminal device to display the same image including handwriting on the touchscreen of the touchscreen display and the screen of the terminal device according to the operation signal. In one embodiment, the touchscreen display may control the terminal device to execute an application according to the operation signal.

In summary, the display system may detect whether the stylus is moved away from the frame of the touchscreen display. When the stylus is moved away from the frame of the touchscreen display, the user may generate handwriting on a virtual whiteboard or on a content displayed on the touchscreen of the touchscreen display. The touchscreen display communicatively connects with the terminal device. When the image is displayed by touchscreen of the touchscreen display according to the video signal. Meanwhile, the image displayed by touchscreen of the touchscreen display is as the same as an image displayed by the screen of the terminal device. The touchscreen display may transmit an operation signal generated by the stylus to the terminal device, such that the user may command the terminal device by using the stylus on the touchscreen. The display system may enable the function of the touchscreen display (or terminal device) suitable for the stylus when the stylus is moved away from the frame of the touchscreen display.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby to enable persons skilled in the art to understand the disclosure for various embodiments and with various modifications as are suited to the particular use or implementation contemplated. It is intended that the scope of the disclosure be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the spirit and scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by persons skilled in the art without departing from the scope of the disclosure as defined by the following claims. Moreover, no element and component in the disclosure is intended to be dedicated to the public regardless of whether the element or component is explicitly recited in the following claims.

## Claims

1. A display system (10), comprising:
a stylus (300);
a touchscreen display (100), comprising a frame (101) and a sensor (150), wherein the sensor (150) is configured to detect whether the stylus (300) is near the frame (101); and
a terminal device (200), communicatively connected to the touchscreen display (100), wherein in response to the stylus (300) being moved away from the frame (101), the touchscreen display (100) is configured to transmit an operation signal to the terminal device (200) and control the terminal device (200) according to the operation signal.

2. The display system according to claim 1, wherein the touchscreen display (100) comprises a first operation system and the terminal device (200) comprises a second operation system, the first operation system and the second operation system are different, wherein the operation signal is a signal of shortcut key of the second operation system.

3. The display system according to claim 1 or 2, wherein the touchscreen display (100) further comprises a touchscreen (140) and a process apparatus (110), wherein the process apparatus (110) is electrically coupled to the touchscreen (140).

4. The display system according to claim 3, wherein the touchscreen (140) is configured to receive a user operation and transmit the user operation to the process apparatus (110), and the process apparatus (100) is configured to generate a transmitted signal according to the user operation to convert the transmitted signal into the operation signal.

5. The display system according to claim 4, wherein the terminal device (200) comprises a screen (240), the touchscreen display (100) is configured to execute a first application and the terminal device (200) is configured to execute the first application, the terminal device (200) is configured to generate handwriting on a content displayed on the screen (240) by the first application according to the user operation of the touchscreen display (100).

6. The display system according to claim 1, 2, 3 or 4, wherein in response to the stylus (300) being moved near the frame (101), the touchscreen display (100) is configured to transmit a disable signal to the terminal device (200) and the terminal device is (200) configured to stop an executed application according to the disable signal.

7. The display system according to any one of the preceding claims 3, wherein the touchscreen display (140) is configured to provide an on-screen display (OSD) menu on the touchscreen (140), and a plurality of modes is displayed in the OSD menu, the touchscreen (140) is configured to receive a user command and transmit the user command to the process apparatus (110) for setting up the touchscreen display (100), wherein the user command corresponds to a selected mode from the plurality modes.

8. The display system according to claim 7, wherein in response to the stylus (300) being moved away from the frame (101), the touchscreen display (100) is configured to determine whether a program is being executed by the process apparatus (110), wherein in response to the program being executed by the touchscreen display (100), the touchscreen display (100) is configured to perform overlapping handwriting on a content displayed on the touchscreen (140) by a second application according to a user operation, wherein the user operation is received by the touchscreen (140) or wherein in response to the stylus (300) being moved away from the frame (101), the touchscreen display (100) is configured to determine whether a program is being executed by the process apparatus (110), wherein in response to the program not being executed by the touchscreen display (100), the touchscreen display (100) is configured to execute a default application.

9. The display system according to any one of the preceding claims, wherein in response to the stylus (300) being moved near the frame (101), the touchscreen display (100) is configured to generate a disable signal, the touchscreen display (100) is configured to stop an executed application according to the disable signal.

10. The display system according to any one of the preceding claims, wherein the sensor (150) comprises one of a magnetic sensor, an infrared sensor and a proximity sensor.

11. The display system according to any one of the preceding claims, wherein the operation signal is transmitted from the touchscreen display (100) to the terminal device (200) based on one of the following protocols: High Definition Multimedia Interface, Open Pluggable Specification, Universal Serial Bus, Wi-Fi, and Bluetooth.

12. The display system according to any one of the preceding claims, wherein the terminal device (200) comprises a screen (240), the touchscreen display (100) is configured to transmit a request message to the terminal device (200) periodically, wherein the terminal device (200) is configured to display the request message by the screen (240), wherein the terminal device (200) is configured to establish a communicative connection between the terminal device (200) and the touchscreen display (100) according to a user command from the terminal device (200).

13. The display system according to any one of the preceding claims, wherein the touchscreen display (100) comprises a touchscreen (140) and the terminal device (200) comprises a screen (240), the touchscreen (240) is configured to display an image and the screen (240) is configured to display the same image.

14. The display system according to any one of the preceding claims, wherein the frame (101) configures with a container (160), the container (160) is configured to accommodate the stylus (300), and the sensor (150) locates to the container (160) and/or the frame (101) configures with an area, the stylus (300) is configured to attach on the area, and the sensor (150) locates in the area of the frame (101).

15. A display method adapted to a display system, the display system (10) comprising a stylus (300), a touchscreen display (100) with a frame (101) and a sensor (150), and a terminal device (200), the display method comprising:
detecting whether the stylus (300) is near the frame (101) of the touchscreen display (100);
communicatively connecting the touchscreen display (100) with the terminal device (200); and
in response to the stylus (300) being moved away from the frame (101), transmitting an operation signal to a terminal device (200) by the touchscreen display (100) and controlling the terminal device (200) by the touchscreen display (100) according to the operation signal.
